# EUROPÄISCHE PATENTANMELDUNG

(11) **EP 2 314 496 A2**
(43) Veröffentlichungstag der Anmeldung: **27.04.2011**
(21) Anmeldenummer: 10188459.1
(22) Anmeldetag: 22.10.2010
(51) Int. Cl.: B62B 1/12, B62B 1/14, B25H 1/04

(54) **Transportkarre für eine halbstationäre Werkzeugmaschine**

(30) Priorität: 23.10.2009 DE 202009014361 U
(71) Anmelder: Metabowerke GmbH, 72622 Nürtingen (DE)
(72) Erfinder: Vorwerk, Uwe, 49770, Herzlake (DE)
(74) Vertreter: Raunecker, Klaus Peter

(57) **Zusammenfassung**

Die Erfindung betrifft eine Transportkarre für eine halbstationäre Werkzeugmaschine mit einem rechteckigen, offenen Tragrahmen (2) mit Längsholmen (3) und Querholmen (4) aus Rohr- oder Profilmaterial, wobei an einer Querseite des Tragrahmens (2) eine Transportachse (5) mit mindestens einem Rollkörper (6), vorzugsweise je einem Rollkörper (6) an jeder Längsseite des Tragrahmens (2), angeordnet ist und wobei am Tragrahmen (2) mindestens ein Maschinenhalter (7) angeordnet ist, der sich parallel zu den Querholmen (4) des Tragrahmens (2) erstreckt, dessen Länge größer ist als die lichte Breite des Tragrahmens (2), der mittels Halterungen (8) an seiner Unterseite am Rohr- oder Profilmaterial des Tragrahmen (2) angebracht, insbesondere angeklemmt ist und an dessen Oberseite eine zu transportierende Werkzeugmaschine (1) befestigbar ist.

## Beschreibung

Die Erfindung betrifft eine Transportkarre für eine halbstationäre Werkzeugmaschine.

Halbstationäre Werkzeugmaschinen der in Rede stehenden Art sind Kappsägen, Kapp- und Gehrungssägen, Kapp-, Gehrungs- und Zugsägen, Kapp-, Gehrungs- und Tischkreissägen, Unterflur-Zugkreissägen, normale Tischkreissägen, Bandsägen, Hobelmaschinen und ähnliche zwar transportable, aber im Betrieb auf einer Unterlage stehende Werkzeugmaschinen für die Holzbearbeitung, die Kunststoffbearbeitung und die Metallbearbeitung. Sie sind dadurch von handgehaltenen Werkzeugmaschinen wie Bohrmaschinen, Winkelschleifer, Akkuschrauber auf der einen Seite und von ortsfesten, also stationären Werkzeugmaschinen wie beispielsweise Platten-Aufteilsägen andererseits abgegrenzt.

Halbstationäre Werkzeugmaschinen der in Rede stehenden Art sind häufig relativ schwer, wiegen beispielsweise ca. 30 kg (Kapp- und Gehrungssäge KGS 305 der Anmelderin), 45 kg (Kapp-, Gehrungs- und Tischkreissäge KGT 501 der Anmelderin), oder etwa 70 kg (Bandsägen BAS 317 der Anmelderin). Für Werkzeugmaschinen der in Rede stehenden Art gibt es Maschinenständer die meist zusammenfaltbar sind, um platzsparend untergebracht werden zu können, oder auch unmittelbar an der Werkzeugmaschine angebrachte Untergestelle, häufig ebenfalls mit einklappbaren Stützbeinen. An den Maschinenständern kann man Transportrollen einseitig anbringen, so dass die jeweilige Werkzeugmaschine auf dem jeweiligen Maschinenständer durch Anheben an einer Seite und Abrollen auf den Transportrollen an der anderen Seite transportiert werden kann. Insgesamt darf dazu auf den Katalog 2008/2009 der Metabowerke GmbH, Katalognummer M 08393/0208, verwiesen werden, insbesondere auf die Seiten 237 und folgende.

Bekannt ist auch ein Maschinenständer in Form eines Universalständers mit integrierten Tischverbreiterungen, der sich durch besonders intelligent konstruierte Maschinenhalter auszeichnet, die am Profil des Universalständers angeklemmt werden können und an deren Oberseite eine Werkzeugmaschine in der passenden Arbeitshöhe befestigbar ist (WO 2007/144044 A1).

Für kleinere halbstationäre Werkzeugmaschinen werden zum Transport mitunter sog. Sackkarren verwendet, die einen rechteckigen, offenen Tragrahmen mit Längsholmen und Querholmen aus Rohr- oder Profilmaterial und einen davon etwa rechtwinklig abragenden Bodenrahmen als Tragplattform ausweisen. Im Winkel zwischen Tragrahmen und Bodenrahmen sitzt dort eine Transportachse mit endseitig je einem Rollkörper, insbesondere einem Rad größeren Durchmessers (siehe beispielsweise die Homepage von "Kaiser + Kraft", "Transportgeräte und Wagen", "Transportkarren", "Stapelkarre aus Edelstahl", gezogen 25. August 2009). Man stellt bei einer solchen als Sackkarre ausgeführten Transportkarre die halbstationäre Werkzeugmaschine auf den die Tragplattform bildenden Bodenrahmen und versucht dann, die Werkzeugmaschine mit dieser Transportkarre an den gewünschten Platz zu transportieren. Dort hebt man die Werkzeugmaschine von der Tragplattform der Transportkarre ab und stellt sie auf den Arbeitstisch oder den zuvor ausgeklappten Maschinenständer.

Für besonders schwere halbstationäre Werkzeugmaschinen wird manchmal auch eine Plattform-Transportkarre mit vier Rollen, zwei feststehenden Rollen und zwei Lenkrollen, verwendet. Derartige Plattform-Transportkarren sind zum Möbeltransport weit verbreitet.

Die voranstehenden Erläuterungen zu der bisherigen Praxis zeigen, dass bei dem Transport halbstationärer Werkzeugmaschinen noch ein erheblicher Verbesserungsbedarf besteht.

Der Lehre der vorliegenden Erfindung liegt daher das Problem zugrunde, eine verbesserte Transportkarre für eine halbstationäre Werkzeugmaschine anzugeben.

Die erfindungsgemäße Transportkarre, bei der das zuvor aufgezeigte Problem gelöst ist, weist zunächst, wie typische Transportkarren, einen rechteckigen, offenen Tragrahmen mit Längsholmen und Querholmen aus Rohr- oder Profilmaterial auf, an dessen einer Querseite eine Transportachse mit mindestens einem Rollkörper, das wäre dann eine relativ breite Walze, vorzugsweise jedoch mit je einem Rollkörper, meist je einem Rad, an jeder Längsseite des Tragrahmens angeordnet ist. Das Besondere an der erfindungsgemäßen Transportkarre für eine halbstationäre Werkzeugmaschine besteht darin, dass am Tragrahmen mindestens ein Maschinenhalter angeordnet ist, der sich parallel zu den Querholmen des Tragrahmens erstreckt, dessen Länge größer ist als die lichte Breite des Tragrahmens, der mittels Halterungen, vorzugsweise Klemmhalterungen, an seiner Unterseite am Rohr- oder Profilmaterial des Tragrahmen angebracht, insbesondere angeklemmt ist und an dessen Oberseite eine zu transportierende Werkzeugmaschine befestigbar ist.

Erfindungsgemäß wird zwar eine Transportkarre verwendet, die vom Grundprinzip her einer klassischen Sackkarre ähnlich ist. Die halbstationäre Werkzeugmaschine wird mit dieser Transportkarre jedoch nicht dadurch transportiert, dass sie auf der vom Tragrahmen etwa rechtwinklig abragenden Tragplattform abgestellt wird. Vielmehr ist eine solche Tragplattform für die Grundkonzeption der erfindungsgemäßen Transportkarre für eine halbstationäre Werkzeugmaschine zunächst überhaupt nicht erforderlich. Zunächst dient nämlich für die Verbindung der zu transportierenden Werkzeugmaschine mit der Transportkarre nur der oder die Maschinenhalter, der oder die am Tragrahmen selbst angebracht ist bzw. sind.

Durch diese Art der Verbindung des Tragrahmens mit der zu transportierenden Werkzeugmaschine erreicht man die Zuordnung des Fahrgestells, also der Transportachse mit dem Rollkörper oder den Rollkörpern zum Korpus der Werkzeugmaschine selbst, an deren einer Seite dann die Transportachse angeordnet ist.

Bestandteil der erfindungsgemäßen Transportkarre ist der Maschinenhalter. Zumeist werden für eine Werkzeugmaschine zwei voneinander beabstandete Maschinenhalter vorgesehen sein. Die Verwendung derartiger Maschinenhalter ist aus dem Stand der Technik zu Maschinenständern (WO 2007/144044 A1) bekannt. Ein solcher Maschinenhalter kann an der Unterseite der Werkzeugmaschine fest angebracht werden. Durch das Anbringen, insbesondere Anklemmen der Halterungen der Maschinenhalter am Tragrahmen ergibt sich dann zu Transportzwecken die Gesamtheit der Transportkarre mit der darauf befestigten halbstationären Werkzeugmaschine.

Regelmäßig wird allerdings der Maschinenhalter bzw. werden zwei Maschinenhalter Bestandteil der Transportkarre sein, wenn diese für den Transport einer halbstationären Werkzeugmaschine bestimmt ist. Dann kann man den Maschinenhalter bzw. die Maschinenhalter an den passenden Stellen des Tragrahmens anbringen und die zu transportierende Werkzeugmaschine an der Oberseite des Maschinenhalters bzw. der Maschinenhalter befestigen.

Grundsätzlich kann ein Maschinenhalter der hier genannten Art auch durch eine einfache Tragplatte oder Tragleiste aus Holz, Kunststoff oder Metall gebildet werden. Eine größere Tragplatte kann durchgehend dann die komplette Werkzeugmaschine tragen. Bei zwei voneinander beab-standeten Tragleisten ist dann die Befestigung auch entsprechend beanstandet möglich. Das ist eine preisgünstigere Lösung gegenüber einem beispielsweise aus Aluminium extrudierten Spezial-Maschinenhalter.

Bevorzugte Ausgestaltungen und Weiterbildungen der erfindungsgemäßen Transportkarre für eine halbstationäre Werkzeugmaschine sind Gegenstand der Unteransprüche.

Zweckmäßigerweise wird ein Querholm des Tragrahmens zugleich von der Transportachse gebildet. Häufig ist das eine in Querrichtung verlaufende Stange, auf deren Enden dann die Rollkörper, insbesondere die Räder, aufgesteckt und gelagert sind. Bevorzugt sind also die Rollkörper als Transporträder, insbesondere aus Kunststoffmaterial und/oder mit einer Rolloberfläche aus Kunststoff- oder Elastomermaterial ausgeführt.

Bereits oben ist darauf hingewiesen worden, dass die erfindungsgemäße Transportkarre im Grundsatz nach Art einer Sackkarre ausgeführt sein kann. Das ist auch die bevorzugte Ausgestaltung der erfindungsgemäßen Transportkarre für eine halbstationäre Werkzeugmaschine. Ist die Transportkarre als Sackkarre ausgeführt, so dient ein vom Tragrahmen etwa rechtwinklig abragender Bodenrahmen oder eine entsprechende Plattform zunächst nur zum Abstellen der Transportkarre in aufrechter Stellung, auch mit an dem Tragrahmen befestigter Werkzeugmaschine.

Da es bei der erfindungsgemäßen Transportkarre meist auf die Tragfähigkeit der vom Tragrahmen rechtwinklig abragenden Tragplattform nicht so entscheidend ankommt wie bei einer typischen Sackkarre, kann es sich empfehlen, dass statt der Tragplattform ein Bodenrahmen aus Rohr- oder Profilmaterial vom Tragrahmen etwa rechtwinklig abragt. Dieser kann dabei auch lediglich aus zwei Längsholmen bestehen. Der Hinweis auf "etwa rechtwinklig" soll deutlich machen, dass natürlich ein Übergangsbereich zwischen dem Tragrahmen und dem Bodenrahmen vorliegt, indem entsprechende Radien oder gerade Rahmenabschnitte in unterschiedlicher Winkelstellung vorhanden sein können.

Von besonderem Interesse ist eine Variante, bei der vorgesehen ist, dass der Bodenrahmen mit dem Tragrahmen lösbar, insbesondere einsteckbar und verriegelbar, verbunden ist.

Bei der erfindungsgemäßen Transportkarre ist die Funktion des Bodenrahmens u.a. die, dass die Transportkarre mit daran befestigter Werkzeugmaschine mit aufrecht stehendem Tragrahmen auf den Rollkörpern der Transportachse und dem Bodenrahmen standsicher abstellbar ist. Das hat Auswirkungen auf die genaue Anordnung des Bodenrahmens relativ zu dem Tragrahmen und interpretiert die Angabe "etwa rechtwinklig".

Wenn der Bodenrahmen mit dem Tragrahmen lösbar, insbesondere einsteckbar und verriegelbar, verbunden ist, so empfiehlt es sich ferner, dass der Bodenrahmen nicht nur einfach vom Tragrahmen abnehmbar ist, sondern dass er wendbar ist und in gewendeter Anordnung mit anderer Ausrichtung gegenüber dem Tragrahmen mit diesem verbindbar ist.

Letzteres gewinnt insbesondere Bedeutung dann, wenn eine besondere Übergangskonstruktion verwirklicht ist. Dann kann nämlich vorgesehen werden, dass die Abwinklung oder Abbiegung so getroffen ist, dass der Bodenrahmen in gewendeter Anordnung als Werkstückabstützung eines auf der Werkzeugmaschine bearbeiteten Werkstückes dienen kann.

Für die Maschinenhalter, die Bestandteil der erfindungsgemäßen Transportkarre sind, empfiehlt es sich, dass der oder die Maschinenhalter am Tragrahmen in dessen Längsrichtung stufenlos verstellbar anbringbar ist bzw. sind. Bereits oben ist darauf hingewiesen worden, dass nach bevorzugter Lehre am Tragrahmen zwei Maschinenhalter seitlich beabstandet voneinander angeordnet sind und eine Werkzeugmaschine mittels beider Maschinenhalter gemeinsam am Tragrahmen befestigbar ist.

Für langgestreckte Werkzeugmaschinen wie beispielsweise Bandsägen empfiehlt sich eine kombinierte Nutzung des Tragrahmens und des Bodenrahmens dergestalt, dass eine Werkzeugmaschine einerseits auf dem Bodenrahmen abstellbar und vorzugsweise auch befestigbar ist und andererseits mittels des Maschinenhalters am Tragrahmen befestigbar ist.

Für das Abstellen des Tragrahmens mit darauf befestigter Werkzeugmaschine in liegender Stellung, so dass unter Umständen auch mit der Werkzeugmaschine auf dem Tragrahmen tatsächlich gearbeitet werden kann, empfiehlt es sich, dass der oder die Maschinenhalter, insbesondere die Halterungen an dem oder den Maschinenhaltern, mit Standfüßen zum Abstellen des Tragrahmens in liegender Stellung versehen sind.

Weiter oben ist darauf hingewiesen worden, dass Maschinenhalter der in Rede stehenden Art bereits bekannt sind aus dem Einsatz bei einem Universal-Maschinenständer. Insoweit wird auf Ausgestaltungen und Weiterbildungen der Maschinenhalter selbst in vollem Umfange auf den Offenbarungsgehalt der diesbezüglichen Vorveröffentlichung, der WO 2007/144044 A1, insbesondere dort Fig. 3-16 und die Beschreibung Seite 10, Zeile 28 bis Seite 15, Zeile 21 verwiesen. Die dortigen Ausführungen werden durch Bezugnahme zum Offenbarungsgehalt der vorliegenden Schutzrechtsanmeldungen gemacht.

Wie bereits weiter oben ausgeführt worden ist, kann man jedoch auch mit einem konstruktiv einfacheren Maschinenhalter in Form einer einfachen Tragplatte aus Holz, Kunststoff oder Metall arbeiten bzw. mit konstruktiv einfacheren Maschinenhaltern in Form von einfachen Tragleisten aus Holz, Kunststoff oder Metall. Diese werden dann mit den entsprechenden Halterungen versehen und an den Tragrahmen befestigt.

Für die Ausgestaltung der Halterungen empfiehlt es sich nach bevorzugter Lehre, diese als die Längsholme des Tragrahmens zumindest zum Teil umfassende Klemmschellen aus Kunststoff oder Metall auszuführen. Diese können am Maschinenhalter angeschraubt oder anderweit befestigt sein. Durch das Befestigen am Maschinenhalter werden diese Klemmschellen mit dem Tragrahmen verspannt und können sich den Längsholmen des Tragrahmens gegenüber dann nicht mehr verschieben.

Halterungen der zuvor erläuterten Art können auch isoliert als zusätzliche Teile vorgesehen sein. Sie können beispielsweise einen anderweitigen Querträger am Tragrahmen halten. Dieser Querträger kann dann für andere Zwecke, beispielsweise das Anbringen einer Werkstückauflage, genutzt werden.

Eine besondere Ausgestaltung der erfindungsgemäßen Transportkarre zeichnet sich dadurch aus, dass der Tragrahmen und die Transportachse so geformt und/oder angeordnet sind, dass eine Werkzeugmaschine mitsamt der Transportkarre mittels der Maschinenhalter bzw. der Halterungen auf einem Maschinenständer befestigbar und/oder auf einer ebenen Fläche abstellbar ist. Insbesondere ist dazu vorgesehen, dass bei liegendem Tragrahmen die Querholme gegenüber den Längsholmen in einer höheren Ebene liegen.

Für die problemlose Anordnung der Transportkarre mit liegendem Tragrahmen empfiehlt sich, dass der tiefste Punkt des äußeren Umfangs der Rollkörper bei liegendem Tragrahmen etwas höher liegt als die Auflageebene, die durch die Halterungen bzw. deren Standfüße definiert ist. Dann steht die Werkzeugmaschine mitsamt der Transportkarre sicher auf der Auflage, beispielsweise auf dem Boden. Die Werkzeugmaschine kann dann ohne weiteres in dieser Stellung betrieben werden. Das ist z.B. für Bodenbelagsarbeiten von Interesse. Bei richtiger Lage der Rollkörper relativ zur Auflageebene kann man bereits durch leichtes Anwinkeln der Transportkarre die Werkzeugmaschine sogar in knieender Stellung verfahren.

Schließlich kann es sich empfehlen, dass am Tragrahmen auf der vom Maschinenhalter abgewandten Unterseite mindestens drei, vorzugsweise vier Standbeine ein- und ausfaltbar angeordnet, insbesondere mittels Schwenkhalterungen angelenkt sind. Hier hat man bereits eine Art Maschinenständer in den Tragrahmen der Transportkarre integriert, der bedarfsweise ausgefaltet wird. Dann muss man die Werkzeugmaschine von dem Tragrahmen der Transportkarre zum Zwecke der Benutzung nicht einmal mehr abnehmen oder anderweit montieren. Man hebt sie lediglich mitsamt dem Tragrahmen an, klappt die Standbeine aus und hat die halbstationäre Werkzeugmaschine damit betriebsbereit.

Im Folgenden wird die Erfindung anhand einer lediglich bevorzugten Ausführungsbeispiele darstellenden Zeichnung näher erläutert. In der Zeichnung zeigt
- Fig. 1: ein erstes Ausführungsbeispiel einer erfindungsgemäßen Transportkarre für eine halbstationäre Werkzeugmaschine mit dem Tragrahmen in liegen- der Stellung,
- Fig. 2: die Transportkarre aus Fig. 1 mit einer Bandsäge als Werkzeugmaschine in schräger, während des Transports eingenommener Lage des Tragrah- mens,
- Fig. 3: die Transportkarre mit der Werkzeugmaschine aus Fig. 2 nun mit aufrecht stehendem Tragrahmen, standsicher abgestellt,
- Fig. 4: die Transportkarre aus Fig. 1 ohne angebaute Werkzeugmaschine,
- Fig. 5: eine vergrößerte Detailansicht des Übergangsbereichs zwischen dem Tragrahmen und dem Bodenrahmen der erfindungsgemäßen Transport- karre,
- Fig. 6: in perspektivischer Ansicht einen bevorzugten, als Aluminium- Strangpressprofil ausgeführten Maschinenhalter,
- Fig. 7: den Maschinenhalter aus Fig. 6 ausschnittweise, schräg von unten,
- Fig. 8: in perspektivischer Ansicht einen Universal-Maschinenständer mit darauf angeordneter halbstationärer Werkzeugmaschine einschließlich Trans- portkarre,
- Fig. 9: ein weiteres Ausführungsbeispiel einer erfindungsgemäßen Transportkarre in perspektivischer Ansicht,
- Fig. 10: die Transportkarre aus Fig. 9 mit eingeklappten Stützbeinen,
- Fig. 11: ausschnittweise, in vergrößerter Darstellung, den Anbringungsbereich der Stützbeine am Tragrahmen der Transportkarre aus Fig. 9 und 10 und
- Fig. 12: in schematischer Darstellung die Anbringung eines als einfache Tragleiste aus Holz ausgeführten Querträgers am Tragrahmen.

Das in der Zeichnung dargestellte Ausführungsbeispiel zeigt in verschiedenen Varianten eine Transportkarre für eine halbstationäre Werkzeugmaschine 1. Was man unter einer halbstationären Werkzeugmaschine zu verstehen hat, ist im allgemeinen Teil der Beschreibung ausführlich erläutert worden. Auf diese Erläuterungen darf verwiesen werden. Der Bestimmungszweck des Transports einer halbstationären Werkzeugmaschine schlägt sich in der Dimensionierung der Transportkarre nieder. Diese muss in der Lage sein, Gewichte von 40 kg bis 100 kg, teilweise auch darüber hinaus, sicher zu transportieren.

Die erfindungsgemäße Transportkarre ist im Grundsatz nach dem Konstruktionsprinzip einer klassischen Sackkarre gestaltet. Dazu wird ebenfalls auf den einleitend genannten Stand der Technik verwiesen. Basis der erfindungsgemäßen Transportkarre ist ein rechtwinkliger, offener Tragrahmen 2 mit Längsholmen 3 und Querholmen 4 aus Rohr-oder Profilmaterial. An einer Querseite des Tragrahmens 2 ist eine Transportachse 5 mit mindestens einem Rollkörper 6, vorzugsweise und im vorliegenden Ausführungsbeispiel verwirklicht mit je einem Rollkörper 6 an jeder Längsseite des Tragrahmens 2, angeordnet. Das ist die Grundkonstruktion einer Sackkarre, allerdings noch ohne eine Tragplattform.

Die jetzt beschriebene Konstruktion der Transportkarre reicht bereits an sich für den erfindungsgemäßen Zweck aus. Dazu ist am Tragrahmen 2 mindestens ein Maschinenhalter 7 angeordnet. Dieser erstreckt sich parallel zu den Querholmen 4 des Tragrahmens 2. Seine Länge ist größer als die lichte Breite des Tragrahmens 2. Er überragt also richtig aufgelegt die Längsholme 3 des Tragrahmens 2 an beiden Längsseiten ein wenig oder ist zumindest gleich breit wie der Tragrahmen 2, wenn man die Mittellinien seines Rohr- oder Profilmaterials aufgreift. Der Maschinenhalter 7 ist mittels Halterungen 8 an seiner Unterseite am Rohr- oder Profilmaterial des Tragrahmens 2 angebracht. An der Oberseite des Maschinenhalters 7 ist die zu transportierende Werkzeugmaschine 1 befestigbar.

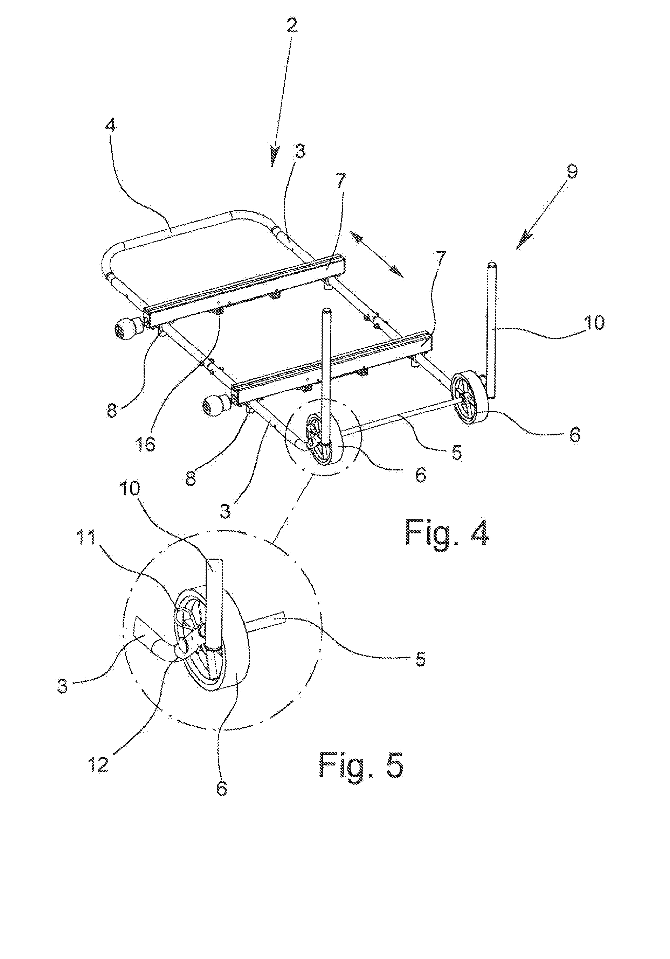

Fig. 4 zeigt die Transportkarre mit dem Tragrahmen 2 und zwei voneinander seitlich beabstandet am Tragrahmen 2 angeordneten Maschinenhaltern 7, die mit ihren Halterungen 8 an der Unterseite mit dem Tragrahmen 2 verbunden sind. Die Anordnung von zwei Maschinenhaltern 7 wird bei dem Transport einer halbstationären Werkzeugmaschine 1 mittels der erfindungsgemäßen Transportkarre die Regel sein. Die weiteren Darstellungen zeigen aber, dass unter besonderen Umständen auch die Nutzung nur eines einzigen Maschinenhalters 7 am Tragrahmen 2 ausreicht.

Bei den Halterungen 8 der Maschinenhalter 7 handelt es sich vorzugsweise um Klemmhalterungen, mit denen, beispielsweise mit einem Klemmhebel oder einem Schnellspannhebel, der jeweilige Maschinenhalter 7 schnell und sicher an dem Rohr- oder Profilmaterial des Tragrahmens 2 angeklemmt werden kann. Das Anklemmen am Tragrahmen 2 kann aber auch mit einer Schraubverbindung erzielt werden. Das wird weiter unten noch genauer erläutert.

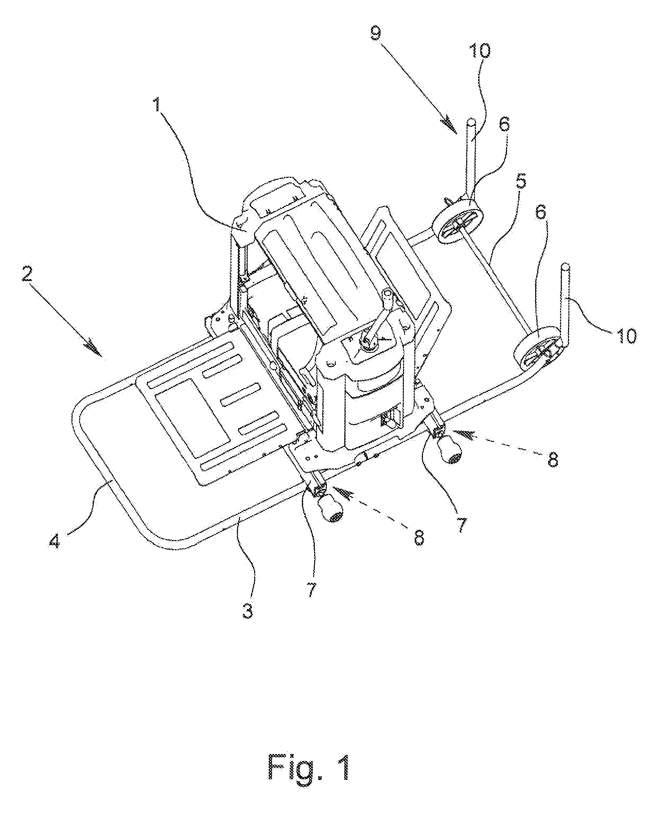

Fig. 1 kann man entnehmen, dass die hier dargestellte halbstationäre Werkzeugmaschine 1 in Form einer Hobelmaschine an den Oberseiten der beiden Maschinenhalter 7 befestigt ist, beispielsweise durch in Nuten der Maschinenhalter 7 eingehängte und oben verschraubte Hammerkopfschrauben. Die Maschinenhalter 7 sind auf dem Tragrahmen 2 mittels der Halterungen 8 fest angebracht. Im Ergebnis ist also die Werkzeugmaschine 1 am Tragrahmen 2 der Transportkarre angebracht und steht nicht auf einer Tragplattform der Transportkarre.

Das in Fig. 1 bis 4 dargestellte Ausführungsbeispiel einer erfindungsgemäßen Transportkarre zeigt weiter, dass ein Querholm 4 des Tragrahmens 2 von der Transportachse 5 gebildet ist.

Beim Rollkörper 6 am Tragrahmen 2 kann es sich um eine breite Rollwalze handeln. Es kann sich auch um zwei Walzen handelt. Bevorzugt ist die dargestellte Konstruktion, bei der vorgesehen ist, dass die Rollkörper 6 als Transporträder, insbesondere aus Kunststoffmaterial und/oder mit einer Rolloberfläche aus Kunststoff- oder Elastomermaterial, ausgeführt sind. Die Rollkörper 6 können z.B. auch als Sternanordnung wie bei speziell konstruierten Treppen-Transport- karren ausgeführt sein.

Das in den Fig. 1 bis 4 dargestellte und bevorzugte Ausführungsbeispiel zeichnet sich ferner dadurch aus, dass die Transportkarre im engeren Sinne als Sackkarre ausgeführt ist. Im dargestellten und bevorzugten Ausführungsbeispiel setzt sich der Tragrahmen 2 dabei über die Transportachse 5 hinaus mit einem etwa rechtwinklig vom Tragrahmen 2 abragenden Bodenrahmen 9 aus Rohr- oder Profilmaterial fort. Ungeachtet der Existenz des Bodenrahmens 9 im Ausführungsbeispiel von Fig. 1 wird die Werkzeugmaschine 1 dort nur am Tragrahmen 2 befestigt.

Der Bodenrahmen 9 ist aber auch bei dem in Fig. 1 dargestellten Ausführungsbeispiel dafür von Bedeutung, dass die Transportkarre standsicher abgestellt werden kann.

Im dargestellten und bevorzugten Ausführungsbeispiel ist der Bodenrahmen 9 auf seine wesentlichen Bestandteile reduziert. Es ist also keine Tragplattform, sondern der Bodenrahmen 9 besteht lediglich aus zwei Längsholmen 10. Das in Fig. 4 und 5 gezeigte besondere Ausführungsbeispiel einer Transportkarre zeigt dabei, dass hier der Bodenrahmen 9 mit dem Tragrahmen 2 lösbar, insbesondere einsteckbar und verriegelbar, verbunden ist. In Fig. 5 erkennt man, im Vergleich mit Fig. 4, dass der Bodenrahmen 9 wendbar ist und in gewendeter Anordnung mit anderer Ausrichtung gegenüber dem Tragrahmen 2 mit diesem verbindbar ist. Am Ende des Längsholms 3 des Tragrahmens 2 ist ein Federsplint 11 einsteckbar, um das dort eingesteckte Ende des Längsholms 10 des Bodenrahmens 9 zu sichern. Das erkennt man in Fig. 5 besonders gut. Der Federsplint 11 sorgt gleichzeitig für die Ausrichtung des Bodenrahmens 9 gegenüber dem Tragrahmen 2.

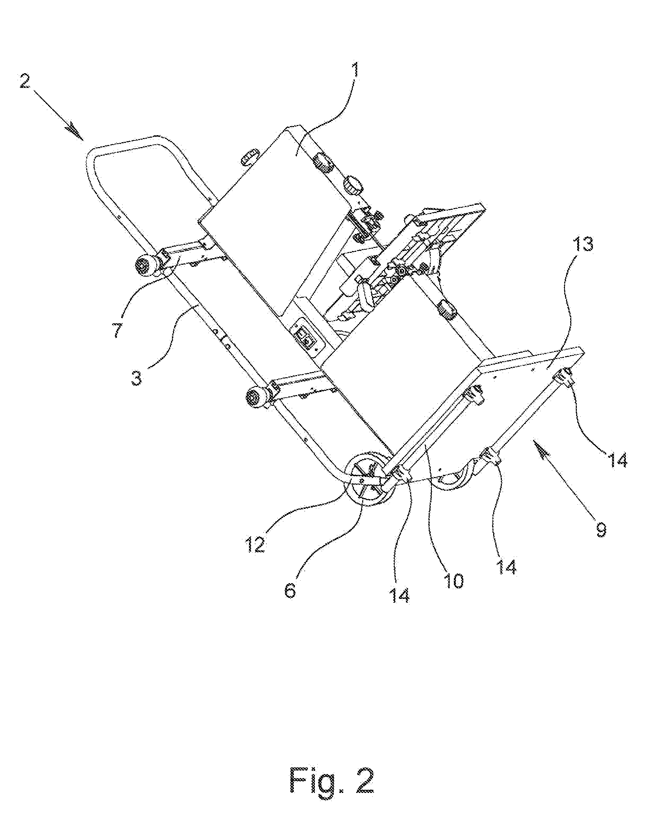

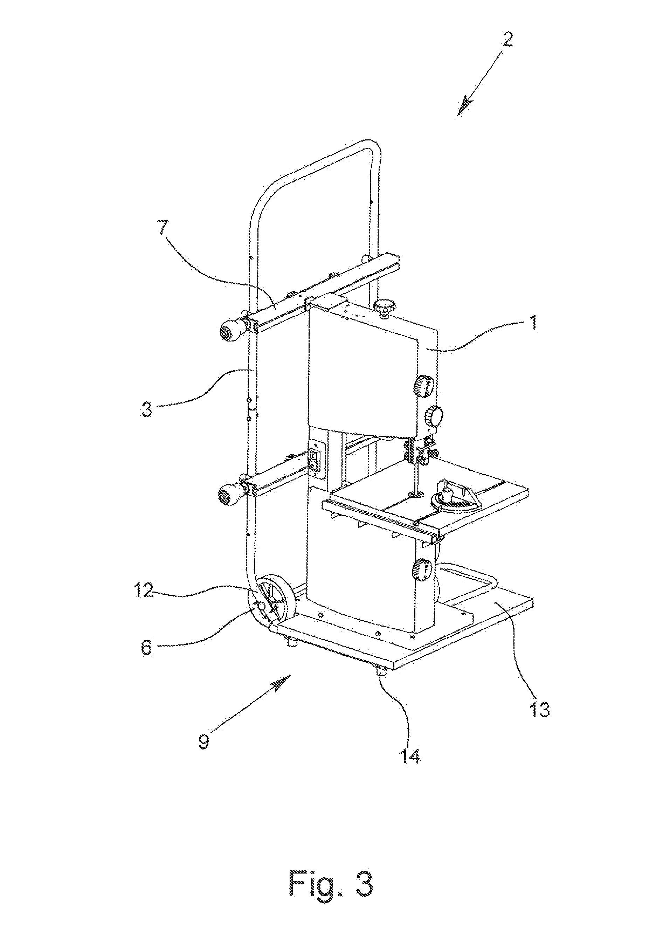

Insgesamt ist vorgesehen, dass der Bodenrahmen 9 relativ zu dem Tragrahmen 2 so angeordnet ist, dass die Transportkarre mit daran befestigter Werkzeugmaschine 1 mit aufrecht stehendem Tragrahmen 2 auf den Rollkörpern 6 der Transportachse 5 und dem Bodenrahmen 9 standsicher abstellbar ist. Diese aufrechte Stellung erkennt man in Fig. 3. Fig. 2 zeigt die Zwischenstellung zwischen Fig. 1 und Fig. 3, nämlich die Stellung, in der sich der Tragrahmen 2 der Transportkarre befindet, wenn man die Transportkarre zum Transport schiebt oder zieht.

Fig. 4 und 5 lassen im Übrigen eine besondere konstruktive Gestaltung des dargestellten Ausführungsbeispiels einer Transportkarre erkennen. Es ist hier vorgesehen, dass die Längsholme 3 des Tragrahmens 2 an der zum Bodenrahmen 9 hin gerichteten Querseite über ein kurzes Endstück 12 abgewinkelt oder abgebogen sind, vorzugsweise über einen Winkel von etwa 45°, und dass auch die Längsholme 3 des Bodenrahmens 9 entsprechend abgewinkelt oder abgebogen sind, vorzugsweise ebenfalls über einen Winkel von etwa 45°. Diese besondere Konstruktion erlaubt es dass der Bodenrahmen 9 in der in Fig. 1 bis 3 gezeigten Normalstellung um etwa 90° von dem Tragrahmen 2 abragt, in der in Fig. 5 dargestellten gewendeten Anordnung sich jedoch etwa parallel zum Tragrahmen 2, allerdings in einer davon etwas beabstandeten, parallelen Ebene, erstreckt.

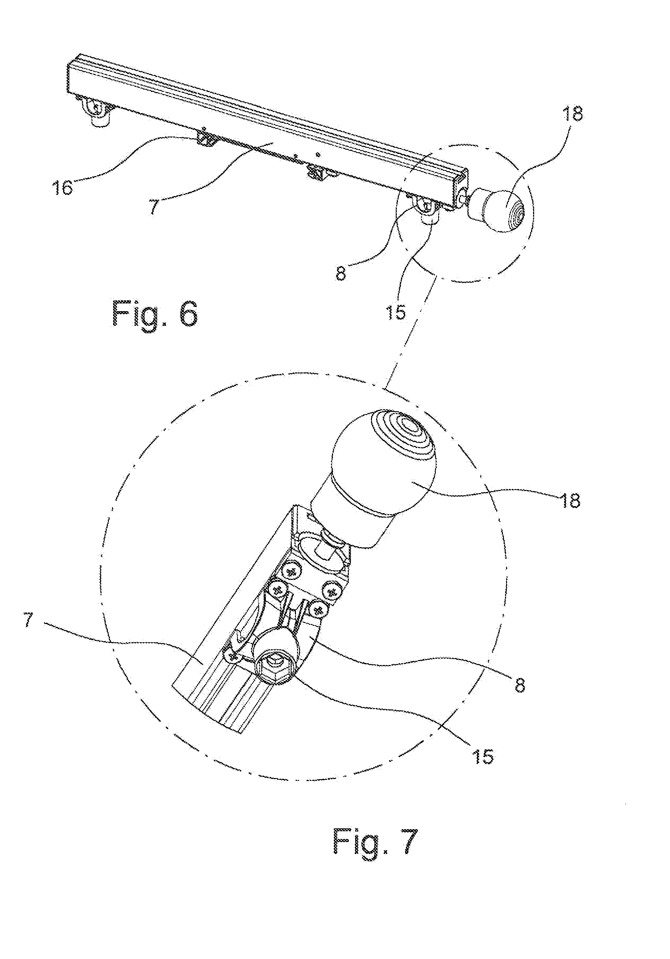

Die zuvor aufgezeigte und beschriebene Konstruktion hat eine Besonderheit dahingehend, dass sie die Möglichkeit bietet, dass die Abwinklung oder Abbiegung so getroffen ist, dass der Bodenrahmen 9 in gewendeter Anordnung als Werkstückabstützung eines auf der Werkzeugmaschine bearbeiteten Werkstückes dienen kann. Diese Besonderheit erkennt man, insoweit auf nachfolgende Erläuterungen vorgreifend, in Fig. 6. Der Bodenrahmen 9 liegt in seiner gewendeten Anordnung in einer solchen Ebene, dass er höhenmäßig etwa mit der Werkstückauflagefläche der Werkzeugmaschine 1 fluchtet.

Insbesondere ist es so zweckmäßig, dass bei liegendem Tragrahmen 2 der tiefste Punkt des äußeren Umfangs der Rollkörper etwas höher liegt als die Auflageebene, die durch die Halterungen 8 bzw. deren Standfüße 15 auf dem Boden oder der anderweitigen Auflage definiert ist. Dann kann man mit einer solchen Werkzeugmaschine 1 beispielsweise auf dem Boden arbeiten, wenn man Verlegearbeiten ausführt. Selbst im Knien lässt sich der Tragrahmen 2 leicht anheben und auf den Rollkörpern 6 seitlich verschieben und dann wieder sicher auf den Standfüßen 15 abstellen.

Das dargestellte und bevorzugte Ausführungsbeispiel zeigt eine Konstruktion, bei das Rohr- oder Profilmaterial ein gebogenes Stahlrohr ist. Dieses gebogene Stahlrohr bildet den kompletten Tragrahmen 2 mit zwei Längsholmen 3 und einem Querholm 4. Der zweite Querholm wird durch die Transportachse 5 gebildet. An dem der Transportachse 5 nahen Ende des Tragrahmens 2 ist der Bodenrahmen 5 durch einen zusätzlichen Stahlrohr-Abschnitt auf jeder Seite, der den entsprechenden Längsholm 10 bildet, gebildet.

Auch für die Anordnung des Tragrahmens 2 insgesamt käme eine Zusammensetzung aus einzelnen Stahlrohr-Abschnitten in Frage. Evtl. wären dann entsprechende Winkelverbinder einzusetzen.

Eine Alternative zu Stahlrohr besteht in einem Aluminium-Hohlprofil bzw. der Zusammensetzung aus Aluminium-Hohlprofilen. Auch insoweit darf für die verschiedenen Varianten auf die bereits eingangs angesprochene WO 2007/144044 A1 verwiesen werden.

Fig. 4 zeigt mit dem dort eingezeichneten Doppelpfeil, dass nach bevorzugter Lehre die Maschinenhalter 7 am Tragrahmen 2 in dessen Längsrichtung stufenlos verstellbar angebracht sein sollten. Dadurch kann man unterschiedliche Breiten unterschiedlicher Werkzeugmaschinen 1 zur Befestigung der Werkzeugmaschinen 1 am Tragrahmen 2 berücksichtigen. Das in Fig. 4 dargestellte Ausführungsbeispiel zeigt in Verbindung mit Fig. 1, dass hier am Tragrahmen 2 zwei Maschinenhalter 7 seitlich beabstandet voneinander angeordnet sind, so dass eine Werkzeugmaschine 1 mittels beider Maschinenhalter 7 gemeinsam am Tragrahmen 2 befestigbar ist.

Demgegenüber zeigt das in Fig. 2 und 3 dargestellte Ausführungsbeispiel, dass die Existenz des Bodenrahmens 9 zwingend voraussetzt, dass eine Werkzeugmaschine 1 einerseits auf dem Bodenrahmen 9 abstellbar und vorzugsweise auch befestigbar ist und andererseits mittels des Maschinenhalters 7 am Tragrahmen 2 befestigbar ist. Man erkennt hier die Werkzeugmaschine 1 in Form einer schlanken, hohen Bandsäge. Diese ist auf dem Bodenrahmen 9 auf einer Tragplattform 13 abgestellt und mittels Halterungen 14, die gleichzeitig Stützfüße bilden, am Bodenrahmen 9 befestigt. Außerdem ist die Werkzeugmaschine 1 an ihrem oberen Ende mittels eines Maschinenhalters 7 am Tragrahmen 2 befestigt. So kann die Werkzeugmaschine 1 mittels der dargestellten Transportkarre trotz ihrer großen Höhe sicher transportiert werden. In Fig. 2 und 3 können die dortigen Halterungen 14 konstruktiv genauso aufgebaut sein wie die Halterungen 8 am Tragrahmen 2. Man erkennt dabei sogleich, dass die Tragplattform 13 im Grunde selbst wieder einen Maschinenhalter darstellt. Sie ist hier als einfache Tragplatte aus Holz, Kunststoff oder Metall ausgeführt. Auf ihr ist die Bodenplatte der dort dargestellten Bandsäge 1 verschraubt.

Bei dem in Fig. 1 und 4 dargestellten Ausführungsbeispiel ist ferner vorgesehen, dass die Maschinenhalter 7, insbesondere die Halterungen 8 an den Maschinenhaltern 7, mit Standfüßen 15 zum Abstellen des Tragrahmens 2 in liegender Stellung versehen sind. Man sieht in Fig. 6 und 7, dass man mit den Standfüßen 15 an den Halterungen 8 der Maschinenhalter 7 die Werkzeugmaschine 1 mitsamt der Transportkarre auf dem Boden oder einem Arbeitstisch abstellen kann. Im Grundsatz kann man bereits jetzt mit der Werkzeugmaschine 1 arbeiten. Im dargestellten und bevorzugten Ausführungsbeispiel sind die Standfüße 15 unmittelbar an den Halterungen 8 ausgeformt. Es kann sich aber auch zusätzlich noch um eingesteckte oder anderweit befestigte Einrichtungen handeln, die an den Halterungen 8 angebracht sind.

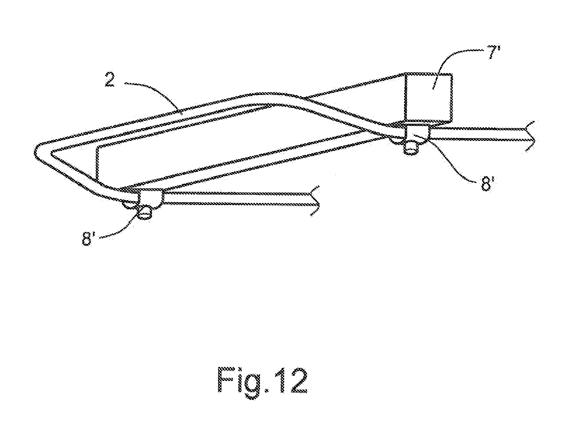

In Verbindung mit Fig. 2 und 3 einerseits sowie Fig. 12 andererseits ist nochmals daran zu erinnern, dass der Maschinenhalter 7 auch als einfache Tragplatte (Tragplattform 13) aus Holz, Kunststoff oder Metall ausgeführt sein kann oder als einfache Tragleiste (Querträger 7' in Fig. 12) ebenfalls aus Holz, Kunststoff oder Metall. Man muss also nicht die herstellungstechnisch aufwendigen, wenn auch zweckmäßigeren Maschinenhalter 7 einsetzen, die in Fig. 6 und 7 dargestellt sind.

Für die Halterungen 8 gibt es verschiedene Ausgestaltungsmöglichkeiten. Das dargestellte und bevorzugte Ausführungsbeispiel, das insbesondere in Fig. 6 und 7 herausgearbeitet ist, macht deutlich, dass hier die Halterungen 8 als die Längsholme 3 des Tragrahmens 2 zumindest zum Teil umfassende Klemmschellen aus Kunststoff oder Metall ausgeführt sind. Im dargestellten Ausführungsbeispiel umfassen diese Klemmschellen die Längsholme 3 des Tragrahmens 2 an drei Seiten und sind an der vierten Seite am Maschinenhalter 7 angeschraubt. Auch eine anderweitige Befestigungstechnik am Maschinenhalter ist hier denkbar. Wesentlich ist, dass die Klemmschellen leicht gelöst werden können, um ein Verschieben des Maschinenhalters 7 auf dem Längsholm 3 zu erlauben. Zieht man die in Fig. 7 gut erkennbaren Befestigungsschrauben wieder an, so wird die Klemmung am Tragrahmen 2 wieder aktiviert.

Fig. 12 zeigt entsprechende Halterungen 8' an einem anderweitigen Querträger 7', der jetzt in Form einer Tragleiste aus Holz vorliegt und für anderweitige Anbringungszwecke dient.

Das in Fig. 4, 6 und 7 dargestellte bevorzugte Ausführungsbeispiel einer Transportkarre zeigt ferner, dass der Maschinenhalter 7 zusätzlich zu den Halterungen 8 für den Tragrahmen 2 weitere Halterungen 16, insbesondere Klemmhalterungen, für einen Maschinenständer 17 o.dgl. aufweist.

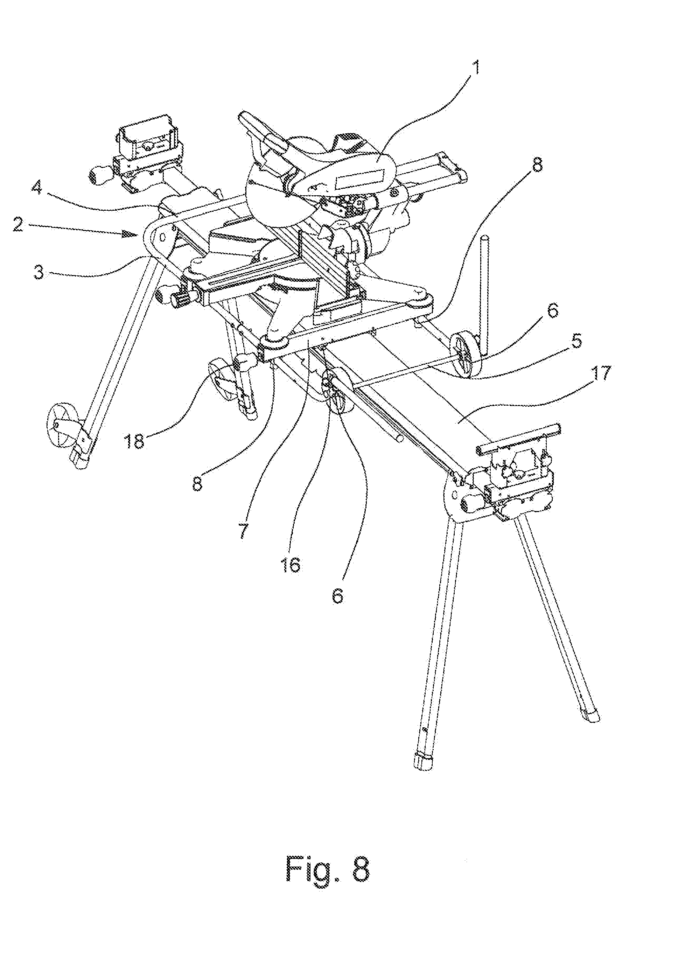

In Fig. 8 sieht man einen solchen Maschinenständer 17, der im Grundsatz der Konstruktion des Maschinenständers gemäß der WO 2007/144044 A1 entspricht. Mittels der "inneren" Halterungen 16 an den Maschinenhaltern 7 lässt sich der gesamte Tragrahmen 2 mit der Werkzeugmaschine 1 auf dem Maschinenständer 17 befestigen.

Das in Fig. 4, 6 und 7 dargestellte Ausführungsbeispiel einer erfindungsgemäßen Transportkarre zeigt, dass, wie an sich bekannt, am Maschinenhalter 7 ein Betätigungsmittel 18 in Form eines Drehknaufs für die Halterungen 16 für den Maschinenständer 17 angeordnet ist. Dieses Betätigungsmittel 18 befindet sich an einem Ende des Maschinenhalters 7. Die Halterungen 8 zur Anbringung des Maschinenhalters 7 am Tragrahmen 2 hingegen sind an den dortigen Standfüßen 15 eigenständig ausgeführt, beispielsweise als Klemmhalterungen oder Schraubhalterungen.

Grundsätzlich ist es möglich, am Maschinenhalter 7 auch ein Betätigungsmittel für die Halterungen für den Tragrahmen 2 vorzusehen. Dies wäre dann zweckmäßigerweise am dem Betätigungsmittel 18 gegenüberliegenden Ende des Maschinenhalters 7 angeordnet.

Das in Fig. 8 dargestellte Ausführungsbeispiel zeigt in Verbindung mit der Darstellung von Fig. 4, dass nach bevorzugter Lehr der Tragrahmen 2 und die Transportachse 5 so geformt und/oder angeordnet sind, dass eine Werkzeugmaschine 1 mitsamt der Transportkarre mittels der Maschinenhalter 7 bzw. der Halterungen 8 auf einem Maschinenständer 17 befestigbar und/oder auf einer ebenen Fläche abstellbar ist. Im dargestellten und bevorzugten Ausführungsbeispiel ist das insbesondere dadurch realisiert, dass bei liegendem Tragrahmen 2 die Querholme 4 gegenüber den Längsholmen 3 in einer höheren Ebene liegen. Die Hochlage gilt hier für den in Fig. 4 und 8 links erkennbaren Querholm 4 wie auch für die in Fig. 4 und 8 rechts erkennbare, dem Querholm 4 gegenüberliegende Transportachse 5.

Das dargestellte Ausführungsbeispiel zeigt weiter, dass der Durchmesser der Rollkörper 6 so gewählt ist, dass diese auf dem Boden nicht aufliegen, wenn der Tragrahmen 2 mit den Standfüßen 15 an den Halterungen 8 der Maschinenhalter 7 auf dem Boden liegend abgestellt ist. Bei liegendem Tragrahmen 2 befindet sich also der tiefste Punkt des äußeren Umfangs der Rollkörper 6 etwas höher als die Auflageebene.

Beispielhaft anzugebende Maße einer typischen Transportkarre gemäß der Erfindung sehen so aus, dass die Längsholme 3 des Tragrahmens 2 einen lichten Abstand von etwa 40 bis 50 cm, vorzugsweise von etwa 44 cm, und/oder eine Dicke von etwa 15 bis 25 mm, vorzugsweise von etwa 20 mm, aufweisen und/oder dass die Querholme 4 des Tragrahmens 2 einen lichten Abstand von etwa 40 bis 50 cm, vorzugsweise von etwa 42 cm, aufweisen und/oder dass die Längsholme 10 des Bodenrahmens 9 eine Länge von etwa 40 cm, aufweisen. Das sind beispielhafte Maße, die nicht beschränkend zu verstehen sind.

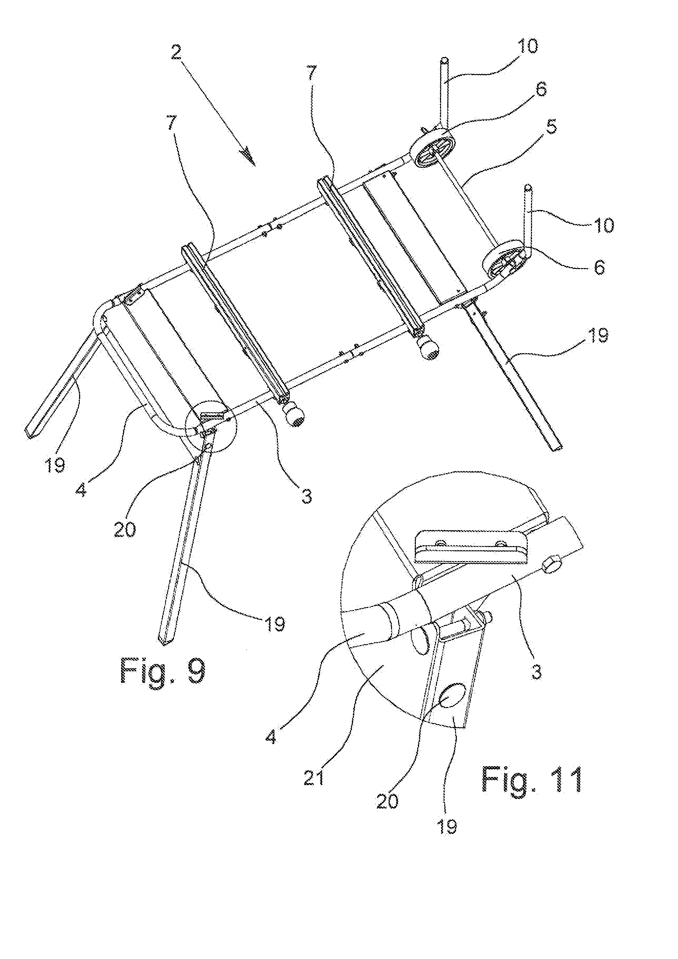

Ein in besonders interessanter Weise modifiziertes Ausführungsbeispiel einer erfindungsgemäßen Transportkarre ist in den Fig. 9 bis 11 dargestellt. Hier ist vorgesehen, dass bei einer ansonsten der zuvor beschriebenen Transportkarre gleichenden Transportkarre am Tragrahmen 2 auf der vom Maschinenhalter 7 abgewandten Unterseite mindestens drei, vorzugsweise vier Standbeine 19 ein- und ausfaltbar angeordnet, insbesondere mittels Schwenkhalterungen 20 angelenkt sind. In Fig. 9 erkennt man den Tragrahmen 2 auf den ausgeklappten Standbeinen 19. Gemeinsam bildet diese Konstruktion einen vollwertigen Maschinenständer für eine auf den Maschinenhaltern 7 angebrachte, in Fig. 9 nicht eingezeichnete Werkzeugmaschine 1.

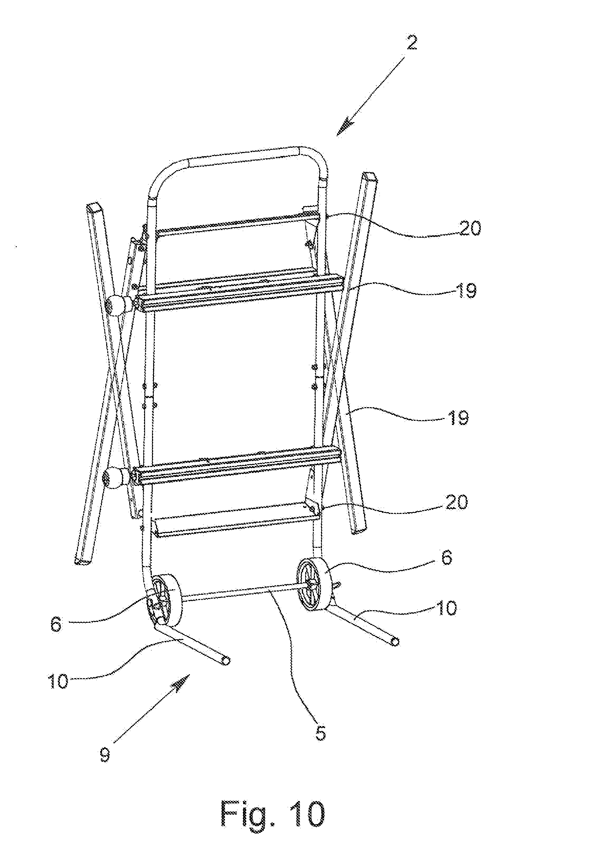

In Fig. 10 erkennt man, dass die Standbeine 19 am Tragrahmen 2 der Transportkarre beim normalen Transport einer Werkzeugmaschine 1 eingeklappt sein können. Dazu dienen die bereits angesprochenen Schwenkhalterungen 20.

Fig. 11 zeigt in vergrößerter Darstellung den Bereich einer Schwenkhalterung 20 für ein Standbein 19 am Tragrahmen 2. Man erkennt ein Querblech 21, das als Anschlag für das Ausklappen des Standbeins 19 dient. Eine sehr einfache und zweckmäßige Konstruktion. Jeweils zwei Standbeine 19 sind mittels eines Querblechs 21 zu einer Einheit verbunden, die gegenüber dem Tragrahmen 2 ausgeklappt (Fig. 9) oder eingeklappt (Fig. 10) werden kann. Das ergibt eine stabile, mittels zweier Schwenkhalterungen 20 gelagerte Einheit.

Fig. 12 zeigt in schematischer Darstellung die zusätzliche Möglichkeit, die zusätzliche Halterungen 8' bieten, die in Verbindung mit einem Querträger 7', beispielsweise in Form einer Tragleiste aus Holz am Tragrahmen 2 angeklemmt sind. Darauf aufstützend kann man beispielsweise ein Glattkantbrett als Tischverbreiterung anbringen. Das ist eine einfache und kostengünstige Möglichkeit der verbesserten Anwendbarkeit einer Werkzeugmaschine 1.

Die vorliegende Erfindung umfasst alle Ausführungsformen, die in den folgenden Sätzen beschrieben sind, die keine Ansprüche, sondern Teil der Beschreibung sind, entsprechend der Entscheidung der juristischen Beschwerdekammer J15/88.
[1]. Transportkarre für eine halbstationäre Werkzeugmaschine, mit einem rechteckigen, offenen Tragrahmen (2) mit Längsholmen (3) und Querholmen (4) aus Rohr- oder Profilmaterial,
   wobei an einer Querseite des Tragrahmens (2) eine Transportachse (5) mit mindestens einem Rollkörper (6), vorzugsweise je einem Rollkörper (6) an jeder Längsseite des Tragrahmens (2), angeordnet ist,
   dadurch gekennzeichnet,
   dass am Tragrahmen (2) mindestens ein Maschinenhalter (7) angeordnet ist, der sich parallel zu den Querholmen (4) des Tragrahmens (2) erstreckt,
   dessen Länge größer ist als die lichte Breite des Tragrahmens (2),
   der mittels Halterungen (8) an seiner Unterseite am Rohr- oder Profilmaterial des Tragrahmen (2) angebracht, insbesondere angeklemmt ist und
   an dessen Oberseite eine zu transportierende Werkzeugmaschine (1) befestigbar ist.
[2]. Transportkarre nach Satz 1, dadurch gekennzeichnet, dass ein Querholm (4) des Tragrahmens (2) von der Transportachse (5) gebildet ist.
[3]. Transportkarre nach Satz 1 oder 2, dadurch gekennzeichnet, dass die Rollkörper (6) als Transporträder, insbesondere aus Kunststoffmaterial und/oder mit einer Rolloberfläche aus Kunststoff- oder Elastomermaterial, ausgeführt sind.
[4]. Transportkarre nach einem der Sätze 1 bis 3, dadurch gekennzeichnet, dass die Transportkarre als Sackkarre ausgeführt ist und dass sich dazu, vorzugsweise, der Tragrahmen (2) über die Transportachse (5) hinaus mit einem etwa rechtwinklig abragenden Bodenrahmen (9) aus Rohr- oder Profilmaterial fortsetzt.
[5]. Transportkarre nach Satz 4, dadurch gekennzeichnet, dass der Bodenrahmen (9) lediglich aus zwei Längsholmen (10) besteht.
[6]. Transportkarre nach Satz 4 oder 5, dadurch gekennzeichnet, dass der Bodenrahmen (9) mit dem Tragrahmen (2) lösbar, insbesondere einsteckbar und verriegelbar, verbunden ist.
[7]. Transportkarre nach einem der Sätze 4 bis 6, dadurch gekennzeichnet, dass der Bodenrahmen (9) wendbar ist und in gewendeter Anordnung mit anderer Ausrichtung gegenüber dem Tragrahmen (2) mit diesem verbindbar ist.
[8]. Transportkarre nach einem der Sätze 4 bis 6, dadurch gekennzeichnet, dass der Bodenrahmen (9) relativ zu den Tragrahmen (2) so angeordnet ist, dass die Transportkarre mit daran befestigter Werkzeugmaschine (1) mit aufrecht stehendem Tragrahmen (2) auf den Rollkörpern (6) der Transportachse (5) und dem Bodenrahmen (9) standsicher abstellbar ist.
[9]. Transportkarre nach einem der Sätze 4 bis 8, dadurch gekennzeichnet, dass die Längsholme (3) des Tragrahmens (2) an der zum Bodenrahmen (9) hin gerichteten Querseite über ein kurzes Endstück (12) abgewinkelt oder abgebogen sind, vorzugsweise über einen Winkel von etwa 45°, und dass auch die Längsholme (10) des Bodenrahmens (9) entsprechend abgewinkelt oder abgebogen sind, vorzugsweise ebenfalls über einen Winkel von etwa 45°.
[10]. Transportkarre nach den Sätzen 8 und 9, dadurch gekennzeichnet, dass die Abwinklung oder Abbiegung so getroffen ist, dass der Bodenrahmen (9) in gewendeter Anordnung als Werkstückabstützung eines auf der Werkzeugmaschine bearbeiteten Werkstückes dienen kann.
[11]. Transportkarre nach einem der Sätze 1 bis 10, dadurch gekennzeichnet, dass das Rohr- oder Profilmaterial ein gebogenes Stahlrohr ist oder aus Stahlrohr-Abschnitten zusammengesetzt ist.
[12]. Transportkarre nach einem der Sätze 1 bis 10, dadurch gekennzeichnet, dass das Rohr- oder Profilmaterial ein Aluminium-Hohlprofil ist oder aus Aluminium-Hohlprofilen zusammengesetzt ist.
[13]. Transportkarre nach einem der Sätze 1 bis 12, dadurch gekennzeichnet, dass der Maschinenhalter (7) am Tragrahmen (2) in dessen Längsrichtung stufenlos verstellbar anbringbar ist.
[14]. Transportkarre nach einem der Sätze 1 bis 13, dadurch gekennzeichnet, dass am Tragrahmen (2) zwei Maschinenhalter seitlich beabstandet voneinander angeordnet sind und eine Werkzeugmaschine (1) mittels beider Maschinenhalter (7) gemeinsam am Tragrahmen (2) befestigbar ist.
[15]. Transportkarre nach Satz 4 und ggf. weiteren Sätzen, dadurch gekennzeichnet, dass eine Werkzeugmaschine (1) einerseits auf dem Bodenrahmen (9) abstellbar und vorzugsweise auch befestigbar ist und andererseits mittels des Maschinenhalters (7) am Tragrahmen (2) befestigbar ist.
[16]. Transportkarre nach einem der Sätze 1 bis 15, dadurch gekennzeichnet, dass der oder die Maschinenhalter (7), insbesondere die Halterungen (8) an dem oder den Maschinenhaltern (7), mit Standfüßen (15) zum Abstellen des Tragrahmens (2) in liegender Stellung versehen sind.
[17]. Transportkarre nach einem der Sätze 1 bis 16, dadurch gekennzeichnet, dass der Maschinenhalter (7) als einfache Tragplatte oder -leiste aus Holz, Kunststoff oder Metall ausgeführt ist.
[18]. Transportkarre nach einem der Sätze 1 bis 17, dadurch gekennzeichnet, dass die Halterungen (8) als die Längsholme (3) des Tragrahmens (2) zumindest zum Teil umfassende Klemmschellen aus Kunststoff, Metall oder Holz ausgeführt sind, die am Maschinenhalter (7) angeschraubt oder anderweit befestigt sind.
[19]. Transportkarre nach einem der Sätze 1 bis 18, dadurch gekennzeichnet, dass zusätzliche Halterungen (8') als die Längsholme (3) des Tragrahmens (2) zumindest zum Teil umfassende Klemmschellen aus Kunststoff, Metall oder Holz ausgeführt und an einem anderweitigen Querträger (7') angeschraubt oder anderweit befestigt sind.
[20]. Transportkarre nach einem der Sätze 1 bis 19, dadurch gekennzeichnet, dass der Maschinenhalter (7) zusätzlich zu den Halterungen (8) für den Tragrahmen (2) weitere Halterungen (16), insbesondere Klemmhalterungen, für einen Maschinenständer (17) o.dgl. aufweist.
[21]. Transportkarre nach Satz 20, dadurch gekennzeichnet, dass am Maschinenhalter (7) ein Betätigungsmittel (18) für die Halterungen (16) für einen Maschinenständer (17) o.dgl. an einem Ende und ggf. ein Betätigungsmittel für die Halterungen für den Tragrahmen am gegenüberliegenden Ende angeordnet ist.
[22]. Transportkarre nach einem der Sätze 1 bis 21, dadurch gekennzeichnet, dass der Tragrahmen (2) und die Transportachse (5) so geformt und/oder angeordnet sind, dass eine Werkzeugmaschine (1) mitsamt der Transportkarre mittels der Maschinenhalter (7) bzw. der Halterungen (8) auf einem Maschinenständer (17) befestigbar und/oder auf einer ebenen Fläche abstellbar ist.
[23]. Transportkarre nach Satz 22, dadurch gekennzeichnet, dass, bei liegendem Tragrahmen (2), die Querholme (4) gegenüber den Längsholmen (3) in einer höheren Ebene liegen.
[24]. Transportkarre nach einem der Sätze 1 bis 23, dadurch gekennzeichnet, dass, bei liegendem Tragrahmen (2), der tiefste Punkt des äußeren Umfangs der Rollkörper (6) etwas höher liegt als die Auflageebene.
[25]. Transportkarre nach einem der Sätze 1 bis 24, dadurch gekennzeichnet, dass die Längsholme (3) des Tragrahmens (2) einen lichten Abstand von etwa 40 bis 50 cm, vorzugsweise von etwa 44 cm, und/oder eine Dicke von etwa 15 bis 25 mm, vorzugsweise von etwa 20 mm, aufweisen.
[26]. Transportkarre nach einem der Sätze 1 bis 25, dadurch gekennzeichnet, dass die Querholme (4), des Tragrahmens (2) einen lichten Abstand von etwa 40 bis 50 cm, vorzugsweise von etwa 42 cm, aufweisen.
[27]. Transportkarre nach einem der Sätze 1 bis 26, dadurch gekennzeichnet, dass die Längsholme (10) des Bodenrahmens (9) eine Länge von etwa 40 cm aufweisen.
[28]. Transportkarre nach einem der Sätze 1 bis 27, dadurch gekennzeichnet, dass am Tragrahmen (2) auf der vom Maschinenhalter (7) abgewandten Unterseite mindestens drei, vorzugsweise vier Standbeine (19) ein- und ausfaltbar angeordnet, insbesondere mittels Schwenkhalterungen (20) angelenkt sind.

## Patentansprüche

1. Transportkarre für eine halbstationäre Werkzeugmaschine,
mit einem rechteckigen, offenen Tragrahmen (2) mit Längsholmen (3) und Querholmen (4) aus Rohr- oder Profilmaterial,
wobei an einer Querseite des Tragrahmens (2) eine Transportachse (5) mit mindestens einem Rollkörper (6), vorzugsweise je einem Rollkörper (6) an jeder Längsseite des Tragrahmens (2), angeordnet ist,
**dadurch gekennzeichnet,**
**dass** am Tragrahmen (2) mindestens ein Maschinenhalter (7) angeordnet ist, der sich parallel zu den Querholmen (4) des Tragrahmens (2) erstreckt, dessen Länge größer ist als die lichte Breite des Tragrahmens (2),
der mittels Halterungen (8) an seiner Unterseite am Rohr- oder Profilmaterial des Tragrahmen (2) angebracht, insbesondere angeklemmt ist und
an dessen Oberseite eine zu transportierende Werkzeugmaschine (1) befestigbar ist.

2. Transportkarre nach Anspruch 1, **dadurch gekennzeichnet,**
**dass** ein Querholm (4) des Tragrahmens (2) von der Transportachse (5) gebildet ist.

3. Transportkarre nach einem der Ansprüche 1 oder 2, **dadurch gekennzeichnet, dass** die Transportkarre als Sackkarre ausgeführt ist und dass sich dazu, vorzugsweise, der Tragrahmen (2) über die Transportachse (5) hinaus mit einem etwa rechtwinklig abragenden Bodenrahmen (9) aus Rohr- oder Profilmaterial fortsetzt.

4. Transportkarre nach Anspruch 3, **dadurch gekennzeichnet,**
**dass** der Bodenrahmen (9) lediglich aus zwei Längsholmen (10) besteht.

5. Transportkarre nach Anspruch 3 oder 4, **dadurch gekennzeichnet,**
**dass** der Bodenrahmen (9) mit dem Tragrahmen (2) lösbar, insbesondere einsteckbar und verriegelbar, verbunden ist.

6. Transportkarre nach einem der Ansprüche 3 bis 5, **dadurch gekennzeichnet, dass** der Bodenrahmen (9) wendbar ist und in gewendeter Anordnung mit anderer Ausrichtung gegenüber dem Tragrahmen (2) mit diesem verbindbar ist.

7. Transportkarre nach einem der Ansprüche 3 bis 5, **dadurch gekennzeichnet, dass** der Bodenrahmen (9) relativ zu den Tragrahmen (2) so angeordnet ist, dass die Transportkarre mit daran befestigter Werkzeugmaschine (1) mit aufrecht stehendem Tragrahmen (2) auf den Rollkörpern (6) der Transportachse (5) und dem Bodenrahmen (9) standsicher abstellbar ist.

8. Transportkarre nach einem der Ansprüche 3 bis 7, **dadurch gekennzeichnet, dass** die Längsholme (3) des Tragrahmens (2) an der zum Bodenrahmen (9) hin gerichteten Querseite über ein kurzes Endstück (12) abgewinkelt oder abgebogen sind, vorzugsweise über einen Winkel von etwa 45°, und dass auch die Längsholme (10) des Bodenrahmens (9) entsprechend abgewinkelt oder abgebogen sind, vorzugsweise ebenfalls über einen Winkel von etwa 45°.

9. Transportkarre nach den Ansprüchen 7 und 8, **dadurch gekennzeichnet, dass** die Abwinklung oder Abbiegung so getroffen ist, dass der Bodenrahmen (9) in gewendeter Anordnung als Werkstückabstützung eines auf der Werkzeugmaschine bearbeiteten Werkstückes dienen kann.

10. Transportkarre nach einem der Ansprüche 1 bis 9, **dadurch gekennzeichnet, dass** der Maschinenhalter (7) am Tragrahmen (2) in dessen Längsrichtung stufenlos verstellbar anbringbar ist.

11. Transportkarre nach einem der Ansprüche 1 bis 10, **dadurch gekennzeichnet, dass** am Tragrahmen (2) zwei Maschinenhalter seitlich beabstandet voneinander angeordnet sind und eine Werkzeugmaschine (1) mittels beider Maschinenhalter (7) gemeinsam am Tragrahmen (2) befestigbar ist.

12. Transportkarre nach einem der Ansprüche 1 bis 11, **dadurch gekennzeichnet, dass** der oder die Maschinenhalter (7), insbesondere die Halterungen (8) an dem oder den Maschinenhaltern (7), mit Standfüßen (15) zum Abstellen des Tragrahmens (2) in liegender Stellung versehen sind.

13. Transportkarre nach einem der Ansprüche 1 bis 12, **dadurch gekennzeichnet, dass** zusätzliche Halterungen (8') als die Längsholme (3) des Tragrahmens (2) zumindest zum Teil umfassende Klemmschellen aus Kunststoff, Metall oder Holz ausgeführt und an einem anderweitigen Querträger (7') angeschraubt oder anderweit befestigt sind.

14. Transportkarre nach einem der Ansprüche 1 bis 13, **dadurch gekennzeichnet, dass**, bei liegendem Tragrahmen (2), der tiefste Punkt des äußeren Umfangs der Rollkörper (6) etwas höher liegt als die Auflageebene.

15. Transportkarre nach einem der Ansprüche 1 bis 14, **dadurch gekennzeichnet, dass** am Tragrahmen (2) auf der vom Maschinenhalter (7) abgewandten Unterseite mindestens drei, vorzugsweise vier Standbeine (19) ein- und ausfaltbar angeordnet, insbesondere mittels Schwenkhalterungen (20) angelenkt sind.
